# EUROPEAN PATENT APPLICATION

(11) **EP 1 916 097 A2**
(43) Date of publication of application: **30.04.2008**
(21) Application number: 07119136.5
(22) Date of filing: 24.10.2007
(51) Int. Cl.: B32B 7/12, B32B 27/36, G02B 1/11, G02B 5/20, G02B 5/30, G02C 7/10, G02C 7/12, G02B 1/10

(54) **A non-glaring laminated body, a coated non-glaring laminated body, a non-glaring material, and a method for producing the non-glaring material**

(30) Priority: 24.10.2006 JP 2006288830
(71) Applicant: MGC Filsheet Co., Ltd., Tokorozawa-city, Saitama 359-1164 (JP)
(72) Inventor: Kimura, Hideaki, Tokorozawa-city Saitama 359-1164 (JP); Hirata, Masukazu, Tokorozawa-city Saitama 359-1164 (JP); Miura, Mitsuo, Tokorozawa-city Saitama 359-1164 (JP); Kawai, Ryozo, Tokorozawa-city Saitama 359-1164 (JP)
(74) Representative: Behnisch, Werner

(57) **Abstract**

[Problem to be solved]

The present invention provides a non-glaring material having an excellent property to cut ultraviolet rays, and having an excellent appearance and optical property as well as easy producibility and processibility, and a method for producing the non-glaring material.

[Means to solve the problem]

A non-glaring laminated body consisting of two transparent plastic material layers, a polarizing film layer which is held between the two transparent plastic material layers, and a synthetic adhesive layer which adheres the plastic material layer to the polarizing film layer, wherein at least one of the adhesive layers includes a fluorescent whitening agent and an ultraviolet ray absorber.

## Description

### [Field of the art]

The present invention relates to a non-glaring material having an excellent property to cut ultraviolet rays, used for non-glaring applications, such as goggles and sunglasses for sports, etc., and having an excellent appearance and optical property as well as easy producibility and processibility, and a method for producing the non-glaring material. In particular, the invention relates to a non-glaring material having both an excellent polarizing property and property to cut ultraviolet rays, and a method for producing the non-glaring material.

### [Background of the art]

Goggles and sunglasses for sports having a polarizing property are excellent in the property to cut reflective light. So, they have been widely recognized as being useful in outdoor activities, such as marine sports, skiing, fishing, etc., and the demand for them has been keenly increasing. On the other hand, for all non-glaring articles, including eyewear such as a lens for glasses, etc., an excellent property to cut ultraviolet rays is required to protect eyes and skin from ultraviolet rays.

Conventionally, a non-glaring article having a polarizing property, such as goggles and sunglasses, etc., has generally been produced from a polarizing film as a main material by several processes. A method for obtaining a product having a property to cut ultraviolet rays as well as such a polarizing property is thought to be classified roughly into a method for initially providing a plastic material used for a lens body with a property to cut ultraviolet rays, and a method for providing the property during processing steps.

For the former method, namely, the method for initially providing a plastic material used for a lens body with a property to cut ultraviolet rays, proposed is a polycarbonate resin composition that includes an ultraviolet ray absorber, a fluorescent whitening agent, and an optical stabilizer (see Reference 1).

For the latter method, regarding a method for providing the property during processing steps, various studies have been done. For example, it is proposed that a lens having diethylene glycol bisallylcarbonate as a main component be immersed in a solution comprising an ultraviolet ray absorber (see Reference 2).

Reference 1: Official Gazette of Japanese Patent Early-publication (Kokai) No. H. 17-206830
Reference 2: Official Gazette of Japanese Patent Early-publication (Kokai) No. H. 17-338868

### [Disclosure of the invention]

### [Problems to be solved]

However, in the non-glaring material obtained by a method for providing the property to cut ultraviolet rays during processing steps, no non-glaring material having an excellent property to cut ultraviolet rays up to long wavelength ultraviolet rays has conventionally been found.

The present invention has been achieved considering the above problems. The present invention provides a non-glaring material having an excellent property to cut ultraviolet rays. It can be used for non-glaring applications, such as goggles and sunglasses for sports, etc. It has an excellent appearance and optical property as well as easy producibility and processibility. The present invention also provides a method for producing the non-glaring material. In particular, the invention provides a non-glaring material having both an excellent polarizing property and property to cut ultraviolet rays, and a method for producing the non-glaring material.

### [Means to be solve the problems]

The inventors have studied the subject of a non-glaring laminated body to solve the above problems. Thereby they found that a non-glaring laminate body comprising a synthetic adhesive layer having a particular fluorescent whitening agent and an ultraviolet ray absorber has both an excellent polarizing property and a property to cut ultraviolet rays. Based on this finding they made this invention.

The present invention provides a non-glaring laminated body, a coated non-glaring laminated body, a non-glaring material, and a method for producing the non-glaring material. Namely, they are the following.
[1]
   A non-glaring laminated body consisting of two transparent plastic material layers, a polarizing film layer which is held between the two transparent plastic material layers, and synthetic adhesive layers which adheres the plastic material layers to the polarizing film layer, wherein at least one of the adhesive layers includes a fluorescent whitening agent and an ultraviolet ray absorber.
[2]
   The non-glaring laminated body of [1], wherein the fluorescent whitening agent is at least any compound selected from the group consisting of benzoxazolyl compounds, stilbene compounds, coumaline compounds, biphenyl compounds, naphthalimide compounds, pyrazoline compounds, and carbostyril compounds.
[3]
   The non-glaring laminated body of [1] or [2], wherein the ultraviolet ray absorber is at least any compound selected from the group consisting of benzophenone compounds, benzotriazole compounds, phenyl salicylate compounds, and triazine compounds.
[4]
   The non-glaring laminated body of any of [1] - [3], wherein the plastic material is a polycarbonate sheet and is 20 µm - 2 mm thick.
[5]
   A coated non-glaring laminated body having a coating layer put on one of the surfaces of the non-glaring laminated body of any of [1] - [4] .
[6]
   The coated non-glaring laminated body having a coating layer put on each of the two surfaces of the non-glaring laminated body of any of [1] - [4].
[7]
   The coated non-glaring laminated body of [5] or [6], wherein the coating layer is at least one organic material selected from the group consisting of acrylic materials, urethane resin materials, polyester resin materials, melamine resin materials, epoxy resin materials, and silicone materials, and is formed by being cured by ultraviolet radiation or heating after coating, and being 0.1 - 20 µm thick.
[8]
   A non-glaring material which is formed by laying the non-glaring laminated body of any of [1] - [4] or the coated non-glaring laminated body of any of [5] - [7] under a lens body consisting of a transparent thermoplastic resin or thermosetting resin.
[9]
   A non-glaring material which is formed by putting the non-glaring laminated body of any of [1] - [4] or the coated non-glaring laminated body of any of [5] - [7] on a lens body consisting of a transparent thermoplastic resin or thermosetting resin.
[10]
   An optical product which comprises the non-glaring material of [8] or [9].
[11]
   An optical product which is polarizing sunglasses or polarizing goggles.
[12]
   A method for producing a non-glaring material, comprising putting a transparent thermoplastic resin on a non-glaring laminated body or a coated non-glaring laminated body,
   wherein the non-glaring laminated body is formed by a polarizing film being held between two transparent plastic material layers by means of a synthetic adhesive, comprising a fluorescent whitening agent and an ultraviolet ray absorber, for at least one layer of the synthetic adhesive.
[13]
   A method for producing a non-glaring material, comprising laying a non-glaring laminated body or a coated non-glaring laminated body under a transparent thermosetting polymerizable composition, subsequently the thermosetting polymerizable composition being polymerized,
   wherein the non-glaring laminated body is formed by a polarizing film being held between two transparent plastic material layers by means of a synthetic adhesive, comprising a fluorescent whitening agent and an ultraviolet ray absorber, for at least one layer of the synthetic adhesive.
[14]
   The method for producing a non-glaring material of [12], wherein the fluorescent whitening agent is at least any compound selected from the group consisting of benzoxazolyl compounds, stilbene compounds, coumaline compounds, biphenyl compounds, naphthalimide compounds, pyrazoline compounds, and carbostyril compounds.
[15]
   The method for producing a non-glaring material of [12] or [13], wherein the ultraviolet ray absorber is at least any compound selected from the group consisting of benzophenone compounds, benzotriazole compounds, phenyl salicylate compounds, and triazine compounds.
[16]
   The method for producing a non-glaring material of any of [12] - [14], wherein the plastic material is a polycarbonate sheet and is 20 µm - 2 mm thick.
[17]
   The method for producing a non-glaring material of any of [12] - [15], wherein the coated non-glaring laminated body has a coating layer put on one of the surfaces of the non-glaring laminated body.
[18]
   The method for producing a non-glaring material of any of [12] - [15], wherein the coated non-glaring laminated body has one coating layer put on each of the two surfaces of the non-glaring laminated body.
[19]
   The method for producing a non-glaring material of any of [12] - [17], wherein the coating layer is at least one organic material selected from the group consisting of acrylic materials, urethane resin materials, polyester resin materials, melamine resin materials, epoxy resin materials, and silicone materials, and is formed by being cured by ultraviolet radiation or heating after coating, and is 0.1- 20 µm thick.

### [Effects of the invention]

A non-glaring laminated body of the invention combines both an excellent polarizing property and a property to cut ultraviolet rays. So the non-glaring material of this invention comprising the non-glaring laminated body has an excellent property to cut ultraviolet rays. Thereby it can be used for goggles for sports and sunglasses for non-glaring applications, and which goggles and sunglasses have an excellent appearance and excellent optical properties.

### [Most preferable embodiment for the invention]

The enbodiments of this invention are explained below.

A non-glaring laminated body of this invention is characterized by consisting of two transparent plastic material layers, a polarizing film layer which is held between the two transparent plastic material layers, and a synthetic adhesive layer which adheres the plastic material layer to the polarizing film layer, wherein at least one of the adhesive layers includes a fluorescent whitening agent and an ultraviolet ray absorber. Since the non-glaring laminated body of this invention is a body that is laminated by means of a synthetic adhesive comprising a fluorescent whitening agent and an ultraviolet ray absorber, it has both an excellent polarizing property and a property to cut ultraviolet rays. It especially has a property to cut long wavelengths as well as short wavelengths of ultraviolet rays.

For the fluorescent whitening agent used in the non-glaring laminated body, any substances having a fluorescent whitening action can be used, with no special limitation. For these substances, for example, benzoxazoline compounds, stilbene compounds, coumaline compounds, biphenyl compounds, naphthalimide compounds, pyrazoline compounds, carbostyril compounds, etc., can be listed. Among these fluorescent whitening agents, particularly, 2,5-bis[5-tert-butylbenzoxazolyl(2)]thiophen, i.e., a benzoxazoline compound, is preferable from the aspect of the property to convert a wavelength.

0.1 - 5 weight parts of the fluorescent whitening agent are used relative to the solid amount of the synthetic adhesive in the non-glaring laminated body. Less than 0.1 weight parts of it is not preferable, because such an amount lacks a desirable fluorescent whitening effect. More than five parts of it are not preferable because its solubility would be lowered. Preferably they are in the range of 0.5 - 3 weight parts from the aspects of the fluorescent whitening effect and solubility.

For the ultraviolet ray absorber in the non-glaring laminated body, any substances having an ultraviolet ray absorbing action can be used, with no special limitation. For these substances, for example, benzophenone compounds, benzotriazole compounds, phenyl salicylate compounds, triazine compounds, etc., can be listed. Among these ultraviolet ray absorbers, compounds capable of effectively cutting ultraviolet rays in both long and short wavelengths are preferable. For this, a combination of both an ultraviolet ray absorber having a property to cut long wavelength ultraviolet rays and an ultraviolet ray absorber having a property to cut short wavelength ultraviolet rays can be used. In particular, it is preferable to use, in combination, 2,2'4,4'-tetrahydroxybenzophenone, which has a property to cut long wavelength ultraviolet rays, and 2,2'-hydroxy-3'-tetrabutyl-5'-methylphenyl-5-chlorobenzotriazone, which has a property to cut short wavelength ultraviolet rays.

0.1-5 weight parts of the ultraviolet ray absorber are used relative to the solid amount of the synthetic adhesive in the non-glaring laminated body. Less than 0.1 weight parts of it is not preferable, because its absorbance will be lowered. More than five parts of it are not preferable, because its solubility will be lowered. From these aspects, preferably it is in the range of 0.5 - 3 weight parts.

For the synthetic adhesive comprising a fluorescent whitening agent and an ultraviolet ray absorber in the non-glaring laminated body, various materials having a heat durability can to some extent be used, with no special limitation. For these materials, for example, acrylic materials, urethane resin materials, polyester resin materials, melamine resin materials, epoxy resin materials, silicone materials, etc., can be listed. Among these synthetic adhesives, in particular, two liquid thermosetting polyurethane resins, each consisting of a polyurethane polymer as a urethane resin material and a curing agent, is preferable for adhesion to a polycarbonate suitable for a transparent plastic material in the non-glaring laminated body.

For the polyurethane polymer, a compound which is a product of a diisocyanate compound that is reacted with a polyoxyalkylenediol at a fixed ratio, which the compound has isocyanate groups at both ends, can be listed. For the diisocyanate compound used for the polyurethane polymer, diphenylmethane-4,4'-disocyanate, tolylene diisocyanate, hexamethylene diisocyanate, isophorone disocyanate, 4,4'-dicyclohexylmethane diisocyanate, lysine isocyanate, and hydrated xylene diisocyanate, may be used. Among these, diphenylmethane-4,4'-disocyanate is preferable. For the polyoxyalkylenediol, polypropyrene glycol, polyethylene glycol, and a polyoxytetramethylene glycol may be used. Among these, a polypropyrene glycol that has a polymerization degree of 5 - 30 is preferable. The molecular weight of the polyurethane polymer is a number average molecular weight of 500 - 5000, preferably 1500 - 4000, and more preferably 2000 - 3000.

The curing agent may be any compound which has two or more hydroxyl groups, without any limitation. For such a compound, for example, a polyurethane polyol, a polyether polyol, a polyester polyol, an acryl polyol, a polybutadiene polyol, a polycarbonate polyol, etc., can be listed. Among these, a polyurethane polyol that is obtained from a particular isocyanate and a particular polyol and that has a hydroxyl group at its end is preferable. Particularly, a polyurethane polyol which is obtained from a diisocyanate compound and a polyol and has hydroxy groups at least at both ends is more preferable. For the diisocyanate compound, diphenylmethane-4,4'-diisocyanate, tolylene diisocyanate, hexamethylene diisocyanate, isophorone diisocyanate, 4,4'-dicyclohexylmethene diisocyanate, lysine isocyanate, and hydrated xylene diisocyanate can be used. Among these, tolylene diisocyanate is preferable. For the polyols, a compound obtained by reacting a trimethylolpropane, etc., with an ethylene oxide or propylene oxide can be used. Among these, it is preferable to use a polypropyreneglycol derivative that has a polymerization degree of 5 - 30. The molecular weight of the curing agent is a number average molecular weight of 500 - 5000, preferably 1500 - 4000, and more preferably 2000 - 3000.

Solvents such as ethyl acetate and tetrahydrofuran can be added to the polyurethane polymer and the curing agent to adjust the viscosity of them. The use of these solvents is particularly effective for homogeneously dispersing an ultraviolet ray absorber and a fluorescent whitening agent in a urethane resin.

Also, a polarizing and photochromic sheet that combines a polarizing property and a photochromic property as well as a property to cut ultraviolet rays can be obtained by adding photochromic dyes, of which the colors in the visible light range are changed by ultraviolet ray radiation, to the synthetic adhesive. These photochromic dyes include spiropyran compounds, spirooxazine compounds, naphthopyran compounds, etc.

For the spiropyran compounds, for example, 1',3',3'-trimethylspiro(2H-1-benzopyran-2,2'-indoline), 1',3',3'-trimethylspiro-8-nitro(2H-1-benzopyran-2,2'-indoline), 1',3',3'-trimethyl-6-hydroxyspiro(2H-1-benzopyran-2,2'-indoline), 1',3',3'-trimethylspiro-8-methoxy(2H-1-benzopyran-2,2'-indoline), 5'-chloro-1',3',3'-trimethyl-6-nitrospiro(2H-1-benzopyran-2,2'-indoline), 6,8-dibromo-1',3',3'-trimethylspiro(2H-1-benzopyran-2,2'-indoline), 6, 8-dibromo-1', 3',3'-trimethylspiro(2H-1-benzopyran-2,2' -indoline), 8-ethoxy-1',3',3',4',7'-pentamethylspiro(2H-1-benzopyran-2,2'-indoline), 5'-chloro-1' 3',3'-trimethylspiro-6,8-dinitro(2H-1-benzopyran-2,2' -indoline), 3,3,1-diphenyl-3H-naphtho-(2,1-b)pyran, 1,3,3,-triphenylspiro[indoline-2,3'-(3H)-naphtho(2,11-b)pyran], 1-(2,3,4,5,b-penatmethylbenzyl)-3,3-dimethylspiro[indoline-2,3'-(3H)-naphtho(2,1-b)p yran], 1-(2-methoxy-5-nitrobenzyl)-3,3-dimethylspiro[indoline-2,3'-naphtho(2,1-b)pyran], 1-(2-nitrobenzyl)-3,3-dimethylspiro[indoline-2,3'-naphtho(2,1-b)pyran], 1,3,3-trimethyl-6'-nitro-spiro[2H-1-benzopyran-2,2'-(2H)-indale], etc., can be listed.

For the spiaooxazine compounds, for example, 1,3,3-trimethylspiro[indolino-2,3'-(3H)naphtho(2,1-b)(1,4)oxazine], 5-methoxy-1,3,3-trimethylspiro[indolino-2,3'-(3H)naphtho(2,1-b)(1,4)oxazine], 5-chloro-1,3,3-trimethylspiro[indolino-2,3'-(3H)naphtho(2,1-b)(1,4)oxazine], 4,7-diethoxy-1,3,3-trimethylspiro[indolino-2,3'-(3H)naphtho(2,1-b)(1,4)oxazine], 5-chloro-1-butyl-3,3-dimethylspiro[indolino-2,3'-(3H)naphtho(2,1-b)(1,4)oxazine], 1,3,3,5-tetramethyl-9'-ethoxyspiro[indolino-2,3'-(3H)naphtho(2,1-b)(1,4)oxazine], 1-benzyl-3,3-dimethylspiro[indole-2,3'-(3H)naphtho(2,1-b)(1,4)oxazine], 1-(4-methoxybenzyl)-3,3-dimethylspiro[indole-2,3'-(3H)naphtho(2,1-b)(1,4)oxazine], 1-(2-methylbenzyl)-3,3-dimethylspiro[indole-2,3'-(3H)naphtho(2,1-b)(1,4)oxazine], 1-(3,5-dimethylbenzyl)-3,3-dimethylspiro[indole-2,3' -(3H)naphtho(2,1-b)(1,4)oxazine], 1-(4-chlorobenzyl)-3,3-dimethylspiro[indole-2,3'-(3H)naphtho(2,1 -b)(1,4)oxazine], 1-(4-bromobenzyl)-3,3-dimethylspiro[mdole-2,3'-(3H)naphtho(2,1-b)(1,4)oxazine], 1-(2-fluorobenzyl)-3,3-dimethylspiro[indole-2,3'-(3H)naphtho(2,1-b)(1,4)oxazine], 1,3,5,6-tetramethyl-3-ethylspiro[indole-2,3'-(3H)pyrido(3,2-f)(1,4)axazine], 1,3,3,5,6-pentamethylspiro[indoline-2,3'-(3H)pyrido(3,2-f)(1,4)oxazine], 6'-(2,3-dihydro- 1H-indole-1H-yl)-1,3-dihydro-3,3-dimethyl-1-propylspiro[2H-indole-2,3 '-(3H)naphtho(2,1-b)(1,4)oxazine], 6'-(2,3-dihydro-1H-indole-1-yl)-1,3-dihydro-3,3-dimethyl-1-(2-methylpropyl)-spiro[2H -indole-2,3'-(3H)naphtho(2,1-b)(1,4)oxazine], 1,3,3-trimethyl-1-6'-(2,3-dihydro-1H-indole-1-yl)spiro[2H-indole-2,3'-(3H)naphtho(2,1 -b)(1,4)oxazine], 1,3,3-trimethyl-6'-(1-piperidyl)spiro[2H-indole-2,3'-(3H)naphtho(2,1-b)(1,4)oxazine], 1,3,3-trimethyl-6'-(1-piperidyl)-6-(trifluoromethyl)spiro[2H-indole-2,3'-(3H)naphtho(2, 1-b)(1,4)oxazine], 1,3,3,5,6-pentamethyl-spiro[2H-indole-2,3'-(3H)naphtho(2,1-b)(1,4)oxazine], etc., can be listed.

For the naphthopyran compounds, for example, 3,3-diphenyl-3H-naphtho(2,1-b)pyran, 2,2-diphenyl-2H-naphtho(2,1-b)pyran, 3-(2-fluorophenyl)-3-(4-methoxyphenyl)-3H-naphtho(2,1-b)pyran, 3-(2-methyl-4-methoxyphenyl)-3-(4-ethoxyphenyl)-3H-naphtho(2,1-b)pyran, 3-(2-furyl)-3-(2-fluorophenyl)-3H-naphtho(2,1-b)pyran, 3-(2-thieyl)-3-(2-fluoro-4-methoxyphenyl)-3H-naphtho(2,1-b)pyran, 3-[2-(1-methylpyroryl)]-3-(2-methyl-4-methoxyphenyl)-3H-naphtho(2,1-b)pyran, spiro[bicycle(3.3.1)nonane-9,3'-3H-naphtho(2,1-b)pyran], spiro[bicycle(3.3.1)nonane-9-2'-3H-naphtho(2,1-b)pyran], 4-[4-[6-(4-molphonyl)-3-phenyl-3H-naphtho(2,1-b)pyran-3-yl]phenyl]molpholine, 4-[3-(4-methoxyphenyl)-3-phenyl-3H-naphtho(2,1-b)pyran-b-yl]molpholine, 4-[3,3-bis(4-methoxyphe-nyl)-3H-naphtho(2,1-b)pyran-6-yl]molpholine, 4-[3-[phenyl-3-[4-piperidyl]phenyl]-3H-naphtho(2,1-b)pyran-6-yl]molpholine, 2,2-diphenyl-2H-naphtho(2,1-b)pyran, etc., can be listed.

For the polarizing film used for the non-glaring laminated body, any polarizing film may essentially be used without any special limitation, if the sheet has some heat durability. Such a polarizing film is preferably formed of a polyvinyl alcohol resin. For the polyvinyl alcohol resin, any ordinary polyvinyl alcohol film can be used without any special limitation. Examples of these polyvinyl alcohol resins include, for example, a polyvinyl alcohol resin, a poly (ethylene-vinyl acetate) copolymer resin, a polyvinyl butylal resin, a polyvinyl acetal resin, etc. Among these polyvinyl alcohol resins, the polyvinyl alcohol resin is preferable.

For the polarizing film, a film comprising a dichroic dye is preferable because it is excellent in heat durability. For example, for the polyvinyl alcohol resin, the resin can be dyed by immersing it while warming it at from room temperature to 50 °C in a solution of the dichroic dye.

Examples of the dyes for producing the polarizing film include, for example, Chrysophenine (C.I.24895), Chlorantine Fast Red (C.I.28160), Sirius Yellow (C.I.29000), Benzopurpurine (C.1.23500), Direct Fast Red (C.I.23630), Brilliant Blue B (C.I.24410), Chlorazol Black BH (C.I.22590), Direct Blue 2B (C.I.22610), Direct Sky Blue (C.I.24400), Diamine Green (C.I.30295), Solophenyl Blue 4GL (C.I.34200), Direct Copper Blue 2B (C.I.24185), Nippon Brilliant Violet BK conc (C.I.27885), Congo Red (C.I.22120), Acid Black (C.I.20470), etc. Among these dyes, two or more dyes can be selected to be used based on the purpose. Within the above parentheses the Color Index Nos. are shown from the Manual of Dyes, New Edition, edited by The Association of Organic Synthesis, Maruzen Co. Ltd., 1970.

The polarizing film is preferably further treated with a metallic compound and boric acid to give an excellent heat durability and solvent resistance. Specifically, the film is treated by the following methods, i.e., a method for orienting the polarizing film that was dyed in a solution of the dichroic dye during or after immersion in a solution of a mixture of a metallic compound and boric acid, or a method for immersing the polarizing film that was oriented and dyed in a solution of the dichroic dye in a solution of a mixture of a metallic compound and boric acid.

The metallic compounds include any transition metals of Groups IV, V, and VI of the Periodic Table which can be recognized to have heat durability and solvent resistance. For costs, metallic salts, such as acetate salts, nitrate salts, sulfate salts, etc., of the Group IV metals of the Periodic Table, such as chromium, manganese, cobalt, nickel, copper, zinc, etc., are preferable. Among these, compounds of nickel, manganese, cobalt, zinc, and copper are more preferable because they are cheap and excellent in the above effects.

For the metallic compounds, for example, manganese acetate (II) tetrahydrate, manganese acetate (III) dihydrate, manganese nitrate (II) hexahydrate, manganese sulfate (II) pentahydrate, cobalt acetate (II) tetrahydrate, cobalt nitrate (II) hexahydrate, cobalt sulfate (II) pentahydrate, nickel acetate (II) tetrahydrate, nickel nitrate (II) hexahydrate, nickel sulfate (II) hexahydrate, zinc acetate (II), zinc sulfate(II), chromium nitrate (III) nonahydrate, copper acetate (II) monohydrate, copper nitrate (II) trihydrate, copper sulfate (II) pentahydrate, etc., can be listed. Among these metallic compounds, any one may be used alone, or two or more may be combined.

Regarding the content of the metallic compound and boric acid in the polarizing sheet, the metal in the metallic compound is preferably 0.2 - 20 mg per 1 g of sheet, and more preferably 1 - 5 mg. The composition of a treating solution has the above content. Generally, it is preferable that the concentration of the metallic compound be 0.5 - 30 g/L and the concentration of boric acid be 2 - 20 g/L. The analysis of the content of the metal and boron included in the polarizing sheet can be performed by atomic absorption photometry.

The condition for immersion in the step of the immersion in the metallic compound and boric acid is ordinary room temperature to 50 °C, and for 5 - 15 minutes. The condition for the step of heating after the immersion is a temperature of 70 °C or more, preferably 90 - 120 °C, and for 1 - 120 minutes, preferably for 5 - 40 minutes.

For the transparent plastic material, various types of a transparent sheet can be used without any special limitation, if it has some heat durability. For this transparent plastic material, polycarbonate resins, non-crystalline polyolefin resins, polyacrylate resins, polysulfone resins, triacetylcellulose resins, polyester resins, etc., can be listed. From the properties of mechanical strength and optical response, polycarbonate resins are preferable.

For the polycarbonate resin, polymers produced by well-known methods from a bisphenol compound are typically 2,2-bis(4-hydroxyphenyl)alkane or 2,2-bis(4-hydroxy-3,5-dihalogenophenyl)alkane. A structural unit having an ester bond comprising a structural unit derived from an aliphatic diol may be included in the skeleton of the polymer. A bisphenol A polycarbonate resin derived from 2,2-bis(4-hydroxyphenyl)propane is preferable. For the molecular weight, there is no special limitation. However, for formability and mechanical strength, the viscosity average molecular weight is 17,000 - 40,000, preferably 20,000 - 30,000.

The thickness of the transparent material is 20µm - 2 mm, preferably 50µm - 1 mm, especially where the material is curve-processed.

The size and shape of the non-glaring laminated body can be freely selected. Namely, they may partly or entirely cover the non-glaring material finally obtained.

For the coated non-glaring laminated body of this invention, a coating layer may be put on one or both surfaces on which the transparent plastic sheet is adhered to the non-glaring laminated body. The coating layer may be coated either before or after the adherence of the transparent sheet.

The material coated on the surface of the transparent sheet in the coated non-glaring laminated body of this invention is an organic coating consisting of at least one organic material selected from acrylic materials, urethane resin materials, polyester resin materials, melamine resin materials, epoxy resin materials, and silicone materials. Among these, for adhesion to a lens and solvent resistance, the material as a main component is preferably an acrylic material, a urethane resin material, or a polyester resin material, and in particular preferably an ultraviolet ray-curable polyurethane(meth)acrylate, polyester(meth)acrylate, or a mixture thereof.

For the urethane(meth)acrylate, a bi-functional urethane(meth)acrylaye oligomer that is obtained by reacting a diisocyanate compound obtained by reacting a polyesterdiol or an aliphatic diol and a diisocyanate with a (meth)acrylate monomer having a (meth)acroyloxy group and a hydroxyl group per molecule, can be listed. A urethane(meth)acrylate, which is obtained by further mixing a urethane(meth)acrylate monomer having a functional group, a (meth)acrylate monomer having two to four functional groups, or a dipentaerythritholhexa(meth)acrylate monomer having six functional groups, as necessary, can be used.

The polyesterdiol can be derived from an aliphatic diol or an aliphatic carboxylic acid. For the aliphatic diol, ethylene glycol, 1,4-butanediol, 1,6-hexanediol, diethylene glycol, dipropylene glycol, triethylene glycol, tetraethylene glycol, etc., can be exemplified. Also, for the aliphatic carboxlic acid, malonic acid, succinic acid, glutaric acid , adipic acid, pimelic acid, suberic acid, sebacic acid, etc., can be exemplified.

For the diisocyanate compound, an aromatic diisocyanate is preferable. For example, a tolylene diisocyanate, a xylene diisocyanate, a diphenylmethane disocyanate, etc., can be exemplified.

The bi-functional urethane(meth)acrylate oligomer can be obtained by a urethane-forming reaction of an isocyanate compound obtained by the reaction of a polyesterdiol or an aliphatic diol and a diisocyanate with an acrylate monomer having an acroyloxy group and a hydroxyl group per molecule, such as a hydroxyethylacrylate, a hydroxypropylacrylate, a hydroxybutylacrylate, etc.

For the mono-functional monomer, a compound with a (meth)acroyloxy group in the molecule, an unsaturated compound such as styrene, α-methylstyrene, etc., or a vinyl cyanate compound such as an acrylonitrile, a methacrylonitrile, etc., can be listed. In particular, preferably a compound having a (meth)acryloyloxy group in the molecule, for example, a methyl(meth)acrylate, an ethyl(meth)acrylate, a butylacrylate, a 2-ethylhexylacrylate, a laurylacrylate, a tridecylacrylate, a cyclohexylacrylate, a 2-hydroxyethylacrylate, etc., can be listed.

For the bi-functional (meth)acrylate monomer, for example, a 1,4-butanediol di(meth)acrylate, a 1,6-hexanediol di(meth)acrylate, a 1.9-nonanediol di(meth)acrylate, a dipropylene glycol di(meth)acrylate, a neopentyl glycol di(meth)acrylate, etc., can be listed.

For the tri- or tetra-fuctional (meth)acrylate monomer, for example, a glycerin (meth)acrylate, a trimethylolpropane tri(meth)acrylate, a ditrimethylolpropane tetra(meth)acrylate, a pentaerythrythol tri(meth)acrylate, etc., can be listed.

For the hexa-functional (meth)acrylate monomer, for example, a dipentaerythrythol hexa(meth)acrylate can be listed.

The polyester acrylate is a saturated or unsaturated polyester acrylate obtained from a polyol, a polycarboxylic acid, and an acrylic acid or its derivative. For an illustrative example, one obtained by using a divalent alcohol, a trivalent alcohol, or a mixture of both, can be listed.

For curing the coating layer of the coated non-glaring laminated body, ultraviolet ray radiation and heat curing are adopted. For productivity, ultraviolet ray radiation is preferable. The thickness of the coating layer is preferably 0.1 - 20µm and preferably 1 - 10µm for functionality. These coating materials include systems with and without a solvent. Typical solvents for it are toluene, methylisobutylketone, isopropyl alcohol, isobutyl alcohol, ethyl cellosolve, etc.

After coating the coating material on the non-glaring laminated body, it is coated using known methods such as spraying, immersing, curtain flow, roll coating, etc., to obtain the coated non-glaring laminated body. Subsequently, it can be cured rapidly by radiating ultraviolet rays from, for example, a low-pressure mercury lamp, a middle-pressure mercury lamp, a high-pressure mercury lamp, an ultra-high pressure mercury lamp, a xenon lamp, a gallium lamp, a metal halide lamp, etc.

The non-glaring material of this invention can be produced by laying the above non-glaring laminated body or coated non-glaring laminated body under a transparent thermoplastic resin. Or, it can be produced by laying the above non-glaring laminated body or coated non-glaring laminated body under a transparent thermosetting polymerizable composition or putting the above non-glaring laminated body or coated non-glaring laminated body on a transparent thermosetting polymerizable composition layer. Namely, the non-glaring material of this invention can be obtained by further injection molding or cast-polymerizing the above non-glaring laminated body or coated non-glaring laminated body, and laying it under a lens body or putting it on a lens body.

The resins used for the injection molding have no special limitation. Any resin used as an ordinary material for a resin lens can be used as it is. Among such a resin, aromatic polycarbonates, typically a bisphenol A polycarbonate, polycarbonates with an optical elastic modulus of 55×10⁻¹²m²/N or less, consisting of aromatic-aliphatic copolymerized polycarbonates or aliphatic polycarbonates, or aromatic-aliphatic copolymerized polycarbonates or aliphatic polycarbonates with 40 weight % or less, preferably 10 - 30 weight % of aromatic polycarbonates, are preferable.

The polymerizable composition used for casting polymerization has no special limitation. Monomer compositions as an ordinary material for a resin lens can be used as they are. For the illustrative examples, for example, methacrylates such as methyl methacrylate, etc., acrylates, monomers having an allyl group such as a diethylene glycol bisallylcarbonate and a diallylphthalate, etc., various methacrylates, acrylates, allyl compounds substituted with bromine or chlorine, further, a urethane acrylic polymerizable composition having an inner urethane bond, a thiourethane polymerizable composition combined an isocyanate with a thiol, and the like, can be listed. However, the thiourethane polymerizable composition is preferable for compatibility with the laminated body.

Regarding an illustrative example of the isocyanate compound which is combined in the thiourethane polymerizable composition, the following compounds can be listed, for example, polyisocyanates, such as diethylene isocyanate, tetramethylene diisocyanate, hexamethylene diisocyanate, trimethylhexamethylene diisocyanate, cyclohexane diisocyanate, 1,3-bis(isocyanatomethyl)cyclohexane, 1,4-bis(isocyanatomethyl)cyclohexane, isophorone diisocyanate, 2,6-bis(isocyanatomethyl)decahydronaphthalene, lysine triisocyanate, 2,4- trilene diisocyanate, 2,6-trilene diisocyanate, o-toluidine diisocyanate, 4,4'-diphenylmethane diisocyanate, diphenylether diisocyanate, 3-(2'-isocyanatecyclohexyl)propyl isocyanate, tris(phenylisocyanate)thiophosphate, isopropylidene bis(cyclohexyl isocyanate), 2,2'-bis(4-isocyanatephenyl)propane, triphenylmethane triisocyanate, bis(diisocyanatetolyl)phenylmethane, 3,3'-dimethoxybenzidine-4,4'-diisocyanate, 1,3-phenylene diisocyanate, 1,4-phenylene diisocyanate, 4,4'-diisocyanatobiphenyl, 4,4'-diisacyanato-3,3'-dimethylbiphenyl, dicyclohexylmethane-4,4'-diisocyanate, 1,1'-methylenebis(4-isocyanatobenzene), 1,1'-methylenebis(3-methyl-4-cyanatobenzene), m-xylilene diisocyanate, p-xylilene diisocyanate, 1,3-bis(1-isocyanate-1-methylethyl)benzene, 1,4-bis(1-isocyanate-1-methylethyl)benzene, 1,3-bis(2-isocyanate-2-propyl)benzene, 2,6-bis(isocyanatomethyl)naphthalene, 1,5-naphthalene diisocyanate, bis(isocyanatemethyl)tetrahydrodicyclopentadiene, bis(isocyanatemethyl)dicyclopentadiene, bis(isocyanatemethyl)tetrahydrothiophene, bis(isocyanatemethyl)thiophene, 2,5-dicyanatemethylnorbornene, bis(isocyanatemethyl)adamantane, dimeric acid diisocyanate, 1,3,5-tri(1-isocyanatehexyl)isocyanuric acid, 2,5-diisocyanatomethyl-1,4-dithiane, 2,5-bis(4-isocyanato-2-thiabutyl)-1,4-dithiane, 2,5-bis(3-isocyanatomethyl-4-isocyanato-2-thiabutyl)-1,4-ditiane, 2,5-bis(3-isocyanato-2-thiapropyl)-1,4-dithiane, 1,3,5-triisocyanatocyclohexane, 1,3,5-tris(isocyanatomethyl)cyclohexane, bis(isocyanatomethylthio)methane, 1,5-diisocyanato-2-isocyanatemethyl-3-thiapentane, 1,2,3-tris(isocyanateethylthio)propane, 1,2,3-tris(isocyanatemethylthio)propane, 1,1,6,6-tetrakis(isocyanatemethyl)-2,5-dithiahexane, 1,1,5,5-tetrakis(isocyanatemethyl)-2,4-dithiapentane, 1,2-bis(isocyanatemethylthio) ethane, 1,5-diisocyanate-3-isocyanatemethyl-2,4-dithiapentane, etc., dimers of these polyisocyanates by a biuret-type reaction, cycled trimers of these polyisocyanates, adducts of these polyisocyanates with alcohols or thiols, etc. Further, compounds of which all or part of the isocyanate groups of the above compounds are replaced by isothiocyanate groups can be listed. Compounds with isocyanate groups or isothiocyanate groups or both used in this invention are exemplified as above. These can be used alone or in combination of two or more of them.

Among these, for heat durability, the polyisocyanates are preferable and the polyisocyanates having cyclic structures are specifically preferable.

For the illustrative examples of the thiol compound which is combined in the thiourethane polimerizable composition, the following compounds can be listed, for example. Namely, they are polythiols, such as 1,2-dimercaptoethane, 1,2-dimercaptopropane, 2,2-dimercaptopropane, 1,3-dimercaptopropane, 1,2,3-trimercaptopropane, 1,4-dimercaptopropane, 1,6-dimercaptohexane, bis(2-mercaptoethyl)sulfide, bis(2,3-dimercaptopropyl)sulfide, 1,2-bis(2-mercaptoethylthio)ethane, 1,5-dimercapto-3-oxapentane, 1,8-dimercapto-3,6-dioxaoctane, 2,2-dimethylpropane-1,3-dithiol, 3,4-dimethoxybutane-1, 2-dithiol, 2-mercaptomethyl-1,3-dimercaptopropane, 2-mercaptomethyl-1,4-dimercaptobutane, 2-(2-mercaptoethylthio)-1,3 -dimercaptopropane, 1,2-bis(2-mercaptoethylthio)-3-mercaptopropane, 4-mercaptomethyl-1,8-dimercapto-3,6-dithiaoctane, 2,4-bis(mercaptomethyl)-1,5-dimercapto-3-thiapentane, 4,8-bis(mercaptomethyl)-1,11-dimercapto-3,6,9-trithiaundecane, 4,7-bis(mercaptomethyl)-1,11-dimercapto-3,6,9-trithiaundecane, 5,7-bis(mercaptomethyl)-1,11-dimercapto-3,6,9-trithiaundecane, 1,2,7-trimercapto-4,6-dithiaheptane, 1,2,9-trimercapto-4,6,8-trithianonane, 1,2,8,9-tetramercapto-4,6-dithianonane,1,2,10,11-tetramercapto-4,6,8-trithiaundecane, 1,2,12,13-tetramercapto-4,6,8,10-tetrathiatridecane,1,1,1-tris(mercaptomethyl)propane, tetrakis(mercaptomethyl)methane, tetrakis(4-mercapto-2-thiabutyl)methane, tetrakis(7-mercapto-2,5-dithiaheptyl)methane, ethyleneglycol bis(2-mercaptoacetate), ethyleneglycol bis (3-mercaptopropionate), 1,4-butanediol bis(2-mercaptoacetate), 1,4-butanediol bis(3-mercaptopropionate), trimethylolpropane tris(2-mercaptoacetate), trimethylolpropane tris(3-mercaptopropionate), pentaerythrythol tetrakis(2-mercaptoacetate), pentaerythrythol tetrakis(3-mercaptopropionate), 1,1-dimercaptocyclohexane, 1,4-dimercaptocyclohexane, 1,3-dimercaptocyclohexane, 1,2-dimercaptocyclohexane, 1,4-bis(mercaptomethyl)cyclohexane, 1,3-bis(mercaptomethyl)cyclohexane, 2,5-bis(mercaptomethyl)-1,4-dithiane, 2,5-bis(2-mercaptoethyl)-1,4-dithiane, 2,5-bis(mercaptomethyl)-1-thiane, 2,5-bis(2-mercaptoethyl)-1-thiane, 1,4-bis(mercaptomethyl)benzene, 1,3-bis(mercaptomethyl)benzene, bis(4-mercaptophenyl)sulfide, bis(4-mercaptophenyl)ether, bis(4-mercaptomethylphenyl)methane, 2,2-bis(4-mercaptophenyl)propane, bis(4-mercaptomethylphenyl)sulfide, bis(4-mercaptomethylphenyl)ether, 2,2-bis(4-mercaptomethylphenyl)propane-2,5-dimercapto-1,3,4-thiadiazole, 3,4-thiophendithiol, 1,2-dimercapto-3-propanol, 1,3-dimercapto-2-propanol, glyceryldithioglycolate, 1,1,2,2-tetarkis(mercaptomethylthio)ethane, 1,1,3,3-tetrakis(mercaptomethylthio)propane, 3-mercaptomethyl-1,5-dimereapto-2,4-dithiapentane, etc., and their dimers - eicosamers.

Among the thiols, for the thiol having an unsaturated group, allylthiol, 2-vinylbenzylthiol, 3-vinylbenzylthiol, 4-vinylbenzylthiol, 2-vinylthiophenol, 3-vinylthiophenol, 4-vinylthiophenol, etc., can be listed. These can be used alone or in combination of two or more of them. Among these, the polythiols are preferable and polythiols having a sulfide structure or an ester structure are specifically preferable.

For the mold used for polymerization by casting, a mold made of glass that is used for making an ordinary lens for glasses can be used as it is.

The optical product of this invention is characterized by being formed and comprising the above non-glaring materials. For these optical products, polarizing sunglasses, polarizing goggles, etc., for example, can be listed. Among these, the polarizing sunglasses or the polarizing goggles are preferable.

This invention also relates to a method for producing the non-glaring material. Namely, a method for producing the non-glaring material of this invention is characterized by a method for producing a non-glaring material comprising putting a non-glaring laminated body or a coated non-glaring laminated body on a transparent thermoplastic resin, wherein the non-glaring laminated body is formed by a polarizing film being held between two transparent plastic material layers using a synthetic adhesive comprising a fluorescent whitening agent and an ultraviolet ray absorber for at least one surface of the polarizing film. A method for producing the non-glaring material of this invention is also characterized by a method for producing a non-glaring material comprising laying a non-glaring laminated body or a coated non-glaring laminated body under a transparent thermosetting polymerizable composition, subsequently the thermosetting polymerizable composition being polymerized, wherein the non-glaring laminated body is formed by a polarizing film being held between two transparent plastic materials using a synthetic adhesive comprising a fluorescent whitening agent and an ultraviolet ray absorber for at least one surface of the polarizing film.

The non-glaring laminated body or coated non-glaring laminated body in the method for producing a non-glaring material of this invention is the same as that in the article of the non-glaring laminated body or coated non-glaring laminated body of this invention.

The fluorescent whitening agent is at least any one selected from the group consisting of benzoxazolyl compounds, stilbene compounds, coumaline compounds, biphenyl compounds, naphthalimide compounds, pyrazoline compounds, and carbostyril compounds.

The ultraviolet ray absorber is at least any one selected from the group consisting of benzophenone compounds, benzotriazole compounds, phenyl salicylate compounds, and triazine compounds.

The transparent plastic material is a polycarbonate sheet and is preferably 20µm - 2 mm thick.

The coated non-glaring laminated body preferably has a coating layer put on one of the surfaces of the non-glaring laminated body or has one coating layer put on each of the two surfaces of the non-glaring laminated body.

Preferably the coating layer consists of at least one organic material selected from the group consisting of acrylic materials, urethane resin materials, polyester resin materials, melamine resin materials, epoxy resin materials, and silicone materials, and is formed by being cured by ultraviolet radiation or heating after coating and is preferably 0.1 - 20 µm thick.

An example of the non-glaring laminated body formed by a polarizing film being held and adhered to between two transparent plastic material layers having a coating layer on its surface, by means of a synthetic adhesive comprising a fluorescent whitening agent and an ultraviolet ray absorber, can be produced, for example, by the following method. To a solution wherein a polyurethane polymer is diluted with a particular organic solvent, 0.1- 3 weight % of an ultraviolet ray absorber relative to the solid amount of a resin is added, 0.1 - 3 weight % of a fluorescent whitening agent relative to the solid amount of the resin is further added, and the mixture is homogeneously stirred and mixed. Then, an approximate ratio of 0.9 - 20, preferably 1 - 10, of isocyanate group (I), relative to the hydroxyl group of a curing agent (I/H), is further added and mixed to form a solution. Generally the concentration of the polymer in the solution is properly 40 - 90 weight %. The solution is coated on one surface of a transparent polycarbonate sheet (with a coating layer put on its surface) using a bar coater so that the thickness of the coating is 5 - 12 µm. After coating, it is dried at room temperature for 1 - 30 minutes. A polarizing film is adhered to the coating surface of the synthetic resin sheet. On the surface of the polarizing film of the sheet a surface of another transparent polycarbonate sheet (with a coating layer put on its surface) is adhered to it to form a sandwich-shape laminate. The urethane polymer which comprises the curing agent is cured by heating the sheet to obtain a transparent synthetic laminated body. The condition for curing the polyurethane polymer is usually at 60 - 140 °C for two hours to one week.

For the diluting solvent, for example, hydrocarbons such as hexane, heptane, octane, cyclohexane, toluene, xylene, ethylbenzene, esters such as ethyl acetate, methyl acetate, isopropyl acetate, n-propyl acetate, isobutyl acetate, n-butyl acetate, isoamyl acetate, methyl propionate, isobutyl propionate, etc., ketones such as acetone, methylethyl ketone, diethyl ketone, methylisobutyl ketone, acetylacetone, cyclohexyl ketone, etc., etheresters such as cellosolve acetate, diethylene glycol diacetate, ethylene glycol mono-n-butylether acetate, propylene glycol monoethylether acetate, etc., tertiary alcohols such as diacetone alcohol, tert-amyl alcohol, etc., tetrahydrofuran, etc., can be listed. Among these, in particular, ethyl acetate, tetrahydrofuran, and toluene, are preferable.

The non-glaring material can be produced by further injection molding or polymerizing by casting the non-glaring laminated body or the coated non-glaring laminated body, followed by laying it under a lens body or putting it on a lens body.

The resin used for the injection molding and the polymerizable composition used for polymerization by casting are the same as that in the article of the non-glaring material of this invention.

For the mold used for polymerization by casting, a mold made of glass that is used for making an ordinary lens for glasses can be used as it is.

The following methods can be utilized in the illustrative procedure to practice the polymerization by casting. They are a method where the laminated body is floated on a polymerizable composition filled in one side of a mold, while another side of the mold is set liquid-tight via a gasket, and then the polymerizable composition is further poured into the mold to polymerize it; a method where the laminated body is supported in a mold by a proper means and then a polymerizable composition is poured into the mold to polymerize it; and a method where the laminated body is attached to one side of a mold and then a polymerizable composition is poured into the mold.

The size and shape of the non-glaring laminated body can be freely selected. Namely, they may partly or entirely cover the whole non-glaring material finally obtained. The laminated body is set in a mold preferably after it is first moistened with a monomer to be used. This results in securing the adherence of the laminated body with the thermoplastic resin or thermosetting resin that is obtained by polymerizing the laminated body with a polymerizable composition, as well as in protecting the resin from the contamination of bubbles. In some cases a polymerization initiator is included in the polymerizable composition. The polymerization is initiated by heating the composition up to a proper temperature.

### [Example]

The present invention is described in detail in the following Examples, but the invention should not be limited by the descriptions thereof.

### Method for measurement

The measurement and calculation of the transmittance, degree of polarization, and thickness of coating layers of the non-glaring materials that were produced in the Examples and Comparative Examples were performed by using the following methods.
(A) Transmittance
   The transmittance was measured using a spectrophotometer, V-550-type (Nihon Bunko Co. Ltd.).
(B) Thickness of coating layers
   The thickness of each coating layer was measured using a multilayer thickness gauge, DC-8200-type (Gunze Co. Ltd.).

### Example 1

### (a) Production of a polarizing film

Polyvinyl alcohol (manufactured by Kurare Co. Ltd., Trade name: VF-P#7500) was dyed at 35 °C for three minutes in an aqueous solution comprising 0.1 g/L of Sumilite Red 4B-P (C.1.28160), 0.78 g/L of Chrysophenine (C.I.24895), 0.3 g/L of Sumilite Supra Blue G (C.I.34200), and 10 g/L of anhydrous sodium sulfate, and then it was oriented by four-fold in the solution. This dyed film was immersed at 35°C for three minutes in an aqueous solution comprising 2.5 g/L of nickel sulfate and 6.6 g/L of boric acid. The film was dried at room temperature for three minutes in its tense state, and then heat-treated at 110°C for three minutes, to obtain a polarizing film. Its optical properties obtained were a transmittance corrected by visual sensitivity in all visible ranges T (vis.) of 29.9% and a degree of polarization P. of 94.3%. The content of the nickel in the film was 1.2 mg/g. The content of the boric acid was 1.3 mg/g.

### (b) Transparent plastic material

A bisphenol A polycarbonate sheet 700 µm thick (manufactured by Mitsubishi Gas Chemical Co. Ltd.) was used as a transparent plastic material.

### (c) Composition of an adhesive

To a solution of 50 g of a prepolymer, 66.7 g of ethyl acetate, and 5 g of a curing agent, 0.39 g of each ultraviolet ray absorber, i.e., 2,2',4,4'-tetrahydrobenzophenone and 2,2'-hydroxy-3'-tetrabutyl-5'-methylphenyl-5-chlorobenzotriazone, 0.47 g of a fluorescent whitening agent, i.e., 2,5-bis[5-tert-butylbenzoxazolyl(2)]thiophen, were added and stirred at room temperature for one hour. The prepolymer was prepared from a polyurethane polymer having an NCO group molar weight of 1500 (diphenylmethane-4,4'-diisocyanate) and from a polypropylene glycol having an average degree of polymerization of 15. The curing agent was prepared from a polypropylene glycol having a hydroxyl group molar weight of 10.

### (d) Production of the non-glaring laminated body of this invention

The adhesive obtained in (c) was coated by a bar coater on one surface of the transparent polycarbonate sheet in (b), dried at room temperature for five minutes, and then the polarizing film obtained in (a) was adhered to it by a laminator (MCK Co. Ltd.). To the surface facing the polarizing film of the laminated sheet another polycarbonate sheet that coated the adhesive as above was adhered, and dried at room temperature for 24 hours and at 70 °C for 24 hours to obtain the non-glaring laminated body of this invention.

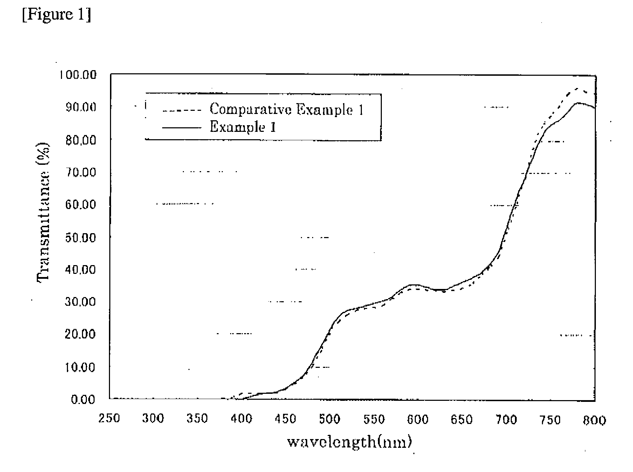

The thickness of a coated layer of the adhesive after being cured was 7 - 9 µm. An excellent result, i.e., a transmittance of 0.17 % at a wavelength of 400 nm, was obtained. Also, transmittance was less than 0.3 % over the whole range of ultraviolet rays, i.e., 280 - 400 nm. The result of the transmittance of each wavelength is shown in Figure 1.

### Example 2

### (a) Production of a polarizing film

Polyvinyl alcohol (manufactured by Kurare Co. Ltd., Trade name: VF-P#7500) was dyed at 35 °C for three minutes in an aqueous solution comprising 1.83 g/L of Sumilite Red 4B-P (C.I.28160), 0.69 g/L of Chrysophenine (C.I.24895), 1.1 g/L of Sumilite Supra Blue G (C.1.34200), and 10 g/L of anhydrous sodium sulfate, and then it was oriented by four-fold in the solution. This dyed film was immersed at 35 °C for three minutes in an aqueous solution comprising 2.5 g/L of nickel sulfate and 6.6 g/L of boric acid. The film was dried at room temperature for three minutes in its tense state, and then heat-treated at 110 °C for three minutes to obtain a polarizing film. The optical properties of the polarizing film obtained were a transmittance corrected by visual sensitivity in all visible ranges T (vis.) of 19.0% and a degree of polarization P of 97.5 %. The content of the nickel in the film was 1.2 mg/g. The content of the boric acid was 1.3 mg/g.

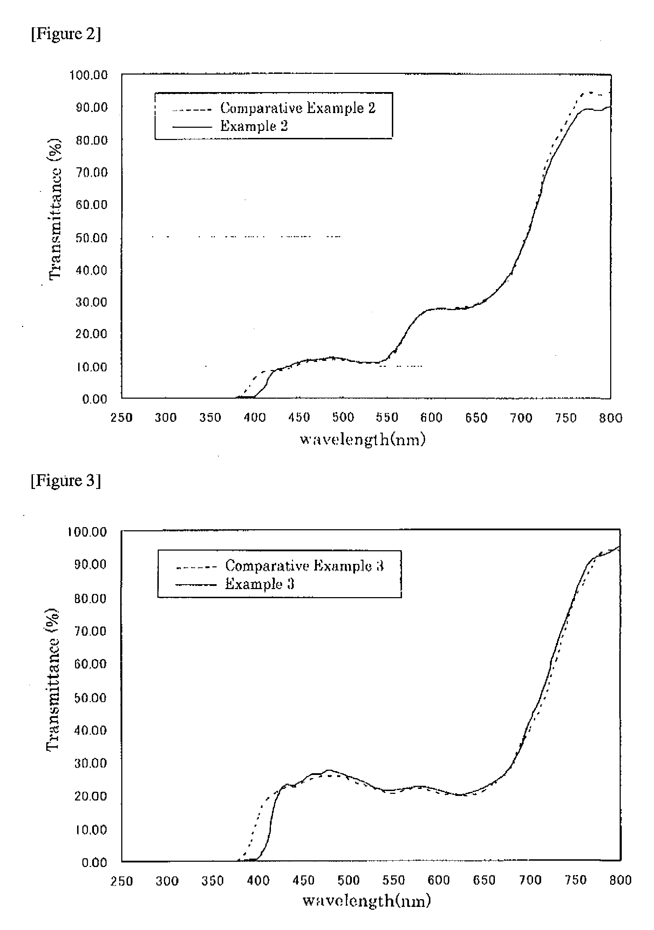

The non-glaring laminated body of this invention was obtained using the polarizing film in (a) by the same procedures as in (b) - (d) in Example 1. The thickness of the coated layer of the adhesive after being cured was 7 - 9 µm. An excellent result, i.e., a transmittance of 0.55 % at a wavelength of 400 nm, was obtained. Also, transmittance was less than 0.7 % over the entire range of ultraviolet rays, i.e., 280 - 400 nm. The result of the transmittance of each wavelength is shown in Figure 2.

### Example 3

### (a) Production of a polarizing film

Polyvinyl alcohol (manufactured by Kurare Co. Ltd., Trade name: VF-P#7500) was dyed at 35 °C for three minutes in an aqueous solution comprising 0.37 g/L of Sumilite Red 4B-P (C.I.28160), 0.23 g/L of Chrysophenine (C.I.24895), 1.73 g/L of Sumilite Supra Blue G (C.I.34200), and 10 g/L of anhydrous sodium sulfate, and then it was oriented by four-fold in the solution. This dyed film was immersed at 35 °C for three minutes in an aqueous solution comprising 2.5 g/L of nickel sulfate and 6.6 g/L of boric acid. The film was dried at room temperature for three minutes in its tense state, and then heat-treated at 110 °C for three minutes to obtain a polarizing film.

The optical properties of the polarizing film obtained were a transmittance corrected by visual sensitivity in all visible ranges T (vis.) of 19.8% and a degree of polarization P of 99.8%. The content of the nickel in the film was 1.2 mg/g and the content of the boric acid was 1.3 mg/g.

### (b) Transparent plastic material

The bisphenol A polycarbonate 700 µm thick (manufactured by Mitsubishi Gas Chemical Co. Ltd.) was used as a transparent plastic material.

### (c) Composition of an adhesive

To an ethylacetate solution comprising the prepolymer and curing agent prepared as in Example 1, 0.39 g of each ultraviolet ray absorber, i.e., 2,2',4,4'-tetrahydrobenzophenone and 2,2'-hydroxy-3'-tetrabutyl-5'-methylphenyl-5-chlorobenzotriazone, and 0.55 g of a fluorescent whitening agent, i.e., 2,5-bis[5-tert-butylbenzoxazolyl(2)]thiophen, were added and stirred at room temperature for one hour.

The non-glaring laminated body of this invention was obtained according to the above (a) - (c), by the same procedures as in (d) in Example 1. The thickness of the coated layer of the adhesive after being cured was 7 - 9 µm. An excellent result, i.e., a transmittance of 0.71 % at a wavelength of 400 nm, was obtained. Also, the transmittance was less than 1.0 % over the entire range of ultraviolet rays, i.e., 280 - 400 nm. The result of the transmittance of each wavelength is shown in Figure 3.

Example 4
The non-glaring laminated body of this invention was obtained using a bisphenol A polycarbonate sheet 700 µm thick with a coated layer of an ultraviolet ray-curable polyurethane(meth)acrylate material on one of its surfaces, by the same procedures as in Example 1.

Example 5
The laminated body in Example 1, which was pre-punched with a hole of ϕ75 mm using an injection molding machine with a clamping force of 100 tons, was loaded in the mold at the setting temperature of 80 °C, and a cavity with a curved surface (a radius of curvature = 63 mm). Then, the bisphenol A polycarbonate that had been pre-dried at 100 °C for six hours or more was injected by an injection molding machine. The temperature of the cylinder of it was 300 °C. A lens body was obtained. It was put on the laminated body having a central thickness of 3 mm, in Example 1 (the non-glaring material of this invention).

Example 6
The laminated body in Example 1 was cut into a circle with a diameter of 60 mm to obtain a bent article having a radius of curvature (R) of 90 mm. Then, 43.5 g of 1,3-bis(isocyanatomethyl)benzene, 56.5 g of pentaerythrythol tetrakis(3-mercaptopropionate), 0.05 g of dimethyltin laurate, and 0.2 g of butoxyethylacid phosphate, as a feed composition of the thermosetting resin, were mixed homogeneously to prepare a composition of a lens monomer. The bent laminated body was then placed in a given glass mold. The molding composition for the lens was poured into its top and bottom. After the temperature was gradually increased from 20 °C to 100 °C over 20 hours and was increased from 100 °C to 120°C over one hour, the composition was cured. After taking it out of the mold, it was annealed at 120 °C for one hour to obtain a lens body, under which the laminated body in Example 1 (the non-glaring material of this invention) was laid.

Comparative Example 1
To an ethylacetate solution comprising the pre-polymer and curing agent prepared as in Example 1, 0.39 g of an ultraviolet ray absorber, i.e., 2,2',4,4'-tetrahydrobenzophenone and 0.94 g of 2,2'-hydroxy-3'-tetrabutyl-5'-methylphenyl-5-chlorobenzotriazone, were added and stirred at room temperature for one hour. The laminated body was obtained by the same procedures as in (d) in Example 1, except for using this adhesive. The coated layer of the adhesive after being cured was 7 - 9 µm thick.

A result of a high level, i.e., a transmittance of 1.73% at a wavelength of 400 nm, was obtained. Also, the transmittance was 0.8% or more in the range of ultraviolet rays of 390 - 400 nm. The result of the transmittance of each wavelength is shown in Figure 1.

Comparative Example 2
The laminated body was obtained by the same procedures as in (d) in Example 1, except for using the polarizing film in (a) of Example 2. The thickness of the coated layer of the adhesive after being cured was 7 - 9 µm.

A result of a high level, i.e., a transmittance of 6.42% at a wavelength of 400 nm, was obtained. Also, the transmittance was 2.0% or more in the range of ultraviolet rays of 390 - 400 nm. The result of the transmittance of each wavelength is shown in Figure 2.

Comparative Example 3
The laminated body was obtained as in the same procedures as in (d) in Example 1, except for using the polarizing film as in (a) of Example 3. The coated layer of the adhesive after being cured was 7 - 9 µm thick.

A result of a high level, i.e., a transmittance of 13.4% at a wavelength of 400 nm, was obtained. Also, the transmittance was 4.0% or more in the range of ultraviolet rays of 390 - 400 nm. The result of the transmittance of each wavelength is shown in Figure 3.

The results of the above examples 1 - 3 and Comparative Examples 1 - 3 are summarized in Table 1. As shown in Table 1, the non-glaring laminated body of this invention showed excellent absorbances in the ultraviolet ray area.

[Table 1]

**Table 1 Optical transmittance (%)**

| Example | 400 nm | 280~400 nm | 390~400 nm |
|---|---|---|---|
| Example 1 | 0.17 | < 0.3 | - |
| Example 2 | 0.55 | < 0.7 | - |
| Example 3 | 0.71 | < 1.0 | - |
| Comparative Example 1 | 1.73 | - | > 0.8 |
| Comparative example 2 | 6.42 | - | > 2.0 |
| Comparative Example 3 | 13.4 | - | > 4.0 |

### [Industrial applicability]

As above, the non-glaring material of this invention is suitable for goggles, sunglasses, etc., for sports for non-glaring applications needing excellent appearance and optical properties, because it has an excellent property to cut ultraviolet rays.

### [Brief explanation of the drawings]

[Figure 1] A figure of a graph illustrating the ultraviolet ray transmittance of the non-glaring laminated body of this invention
[Figure 2] A figure of a graph illustrating the ultraviolet ray transmittance of the non-glaring laminated body of this invention
[Figure 3] A figure of a graph illustrating the ultraviolet ray transmittance of the non-glaring laminated body of this invention

## Claims

1. A non-glaring laminated body consisting of two transparent plastic material layers, a polarizing film layer which is held between the two transparent plastic material layers, and synthetic adhesive layers which adhere the plastic material layers to the polarizing film layer, wherein at least one of the adhesive layers includes a fluorescent whitening agent and an ultraviolet ray absorber.

2. The non-glaring laminated body of Claim 1, wherein the fluorescent whitening agent is at least any compound selected from the group consisting of benzoxazolyl compounds, stilbene compounds, coumaline compounds, biphenyl compounds, naphthalimide compounds, pyrazoline compounds, and carbostyril compounds.

3. The non-glaring laminated body of Claim 1 or 2, wherein the ultraviolet ray absorber is at least any compound selected from the group consisting of benzophenone compounds, benzotriazole compounds, phenyl salicylate compounds, and triazine compounds.

4. The non-glaring laminated body of any of Claims 1 - 3, wherein the plastic material is a polycarbonate sheet and is 20 µm - 2 mm thick.

5. A coated non-glaring laminated body having a coating layer put on one of the surfaces of the non-glaring laminated body of any of Claims 1 - 4.

6. The coated non-glaring laminated body having a coating layer put on each of the two surfaces of the non-glaring laminated body of any of Claims 1 - 4.

7. The coated non-glaring laminated body of Claim 5 or 6, wherein the coating layer consists of at least one organic material selected from the group consisting of acrylic materials, urethane resin materials, polyester resin materials, melamine resin materials, epoxy resin materials, and silicone materials, and is formed by being cured by ultraviolet radiation or heating after coating, and is 0.1- 20 µm thick.

8. A non-glaring material which is formed by laying the non-glaring laminated body of any of Claims 1 - 4 or the coated non-glaring laminated body of any of Claims 5 - 7 under a lens body consisting of a transparent thermoplastic resin or thermosetting resin.

9. The non-glaring material which is formed by putting the non-glaring laminated body of any of Claims 1 - 4 or the coated non-glaring laminated body of any of Claims 5 - 7 on a lens body consisting of a transparent thermoplastic resin or a thermosetting resin.

10. An optical product which comprises the non-glaring material of Claim 8 or 9.

11. An optical product which is polarizing sunglasses or polarizing goggles.

12. A method for producing a non-glaring material, comprising putting a transparent thermoplastic resin on a non-glaring laminated body or a coated non-glaring laminated body,
wherein the non-glaring laminated body is formed by a polarizing film being held between two transparent plastic material layers by means of a synthetic adhesive, comprising a fluorescent whitening agent and an ultraviolet ray absorber, for at least one layer of the synthetic adhesive.

13. A method for producing a non-glaring material, comprising laying a non-glaring laminated body or a coated non-glaring laminated body under a transparent thermosetting polymerizable composition, subsequently the thermosetting polymerizable composition being polymerized,
wherein the non-glaring laminated body is formed by a polarizing film being held between two transparent plastic material layers by means of a synthetic adhesive, comprising a fluorescent whitening agent and an ultraviolet ray absorber, for at least one layer of the synthetic adhesive.

14. The method for producing a non-glaring material of Claim 12, wherein the fluorescent whitening agent is at least any compound selected from the group consisting of benzoxazolyl compounds, stilbene compounds, coumaline compounds, biphenyl compounds, naphthalimide compounds, pyrazoline compounds, and carbostyril compounds.

15. The method for producing a non-glaring material of Claim 12 or 13, wherein the ultraviolet ray absorber is at least any selected from the group consisting of benzophenone compounds, benzotriazole compounds, phenyl salicylate compounds, and triazine compounds.

16. The method for producing a non-glaring material of any of Claims 12 - 14, wherein the plastic material is a polycarbonate sheet and is 20 µm - 2 mm thick.

17. The method for producing a non-glaring material of any of Claims 12 - 15, wherein the coated non-glaring laminated body has a coating layer put on one of the surfaces of the non-glaring laminated body.

18. The method for producing a non-glaring material of any of Claims 12 - 15, wherein the coated non-glaring laminated body has one coating layer put on each of the two surfaces of the non-glaring laminated body.

19. The method for producing a non-glaring material of any of Claims 12 - 17, wherein the coating layer is at least one organic material selected from the group consisting of acrylic materials, urethane resin materials, polyester resin materials, melamine resin materials, epoxy resin materials, and silicone materials, and is formed by being cured by ultraviolet radiation or heating after coating, and being 0.1-20 µm thick.
